# EUROPEAN PATENT APPLICATION

(11) **EP 4 207 709 A1**
(43) Date of publication of application: **05.07.2023**
(21) Application number: 21886818.0
(22) Date of filing: 27.10.2021
(51) Int. Cl.: H04L 65/40, H04W 76/11, H04W 64/00

(54) **ELECTRONIC DEVICE USING CARRIER NETWORK AND OPERATION METHOD THEREOF**

(30) Priority: 30.10.2020 KR 20200142669
(71) Applicant: Samsung Electronics Co., Ltd., Suwon-si, Gyeonggi-do 16677 (KR)
(72) Inventor: KIM, Jinho, Suwon-si Gyeonggi-do 16677 (KR); KIM, Sungin, Suwon-si Gyeonggi-do 16677 (KR); KIM, Hongshik, Suwon-si Gyeonggi-do 16677 (KR); JANG, Jaewon, Suwon-si Gyeonggi-do 16677 (KR)
(74) Representative: Arnold & Siedsma
(86) International application number: PCT/KR2021/015255
(87) International publication number: WO 2022/092824

(57) **Abstract**

According to various embodiments, an electronic device comprises memory and at least one processor, wherein the at least one processor may be set to control the electronic device to: acquire identification information about at least one application permitted to use a carrier network, and store, in the memory, the acquired identification information about the at least one application; confirm a network connection request from a first application executed by the at least one processor; determine, on the basis of the confirmation of the network connection request, whether identification information about the first application corresponds to the stored identification information about the at least one application; establish a protocol data unit (PDU) session associated with the carrier network on the basis that the identification information about the first application corresponds to the stored identification information about the at least one application; and transmit and receive data associated with the first application by using the PDU session associated with the carrier network.

## Description

### [Technical Field]

The disclosure relates to an electronic device using a carrier network and a method for operating the same.

### [Background Art]

A communication operator may provide a carrier network (or an operator-dedicated network) to provide a specific service. The specific service may be managed to be allowed only to limited applications. For example, only limited applications may transmit and receive data using the carrier network. To allow only limited applications to use the carrier network, it may be needed to assign an authority to use the carrier network to a designated application among applications installed in the electronic device.

One implementation example employs a scheme for installing an application for using the carrier network in a system area of the electronic device. Another implementation example employs a scheme for processing signing with a unique key value associated with the electronic device when an application is created. Conventionally, there were only few types of applications for using the carrier network, and the rules were not changed according to the network conditions, so it was easy to implement a scheme for processing signing with a unique key value associated with the electronic device.

### [Detailed Description of the Invention]

### [Technical Problem]

If following the scheme of installing an application in the system area of the electronic device, which is one implementation example, the application installed in the system area may not only use the carrier network but also perform other operations requiring a higher-level authority. If following the other implementation example, a scheme of processing signing with a unique key value associated with the electronic device, the application creator is required to request the manufacturer of the electronic device for the unique key value of the electronic device whenever creating and/or modifying a new application. Further, it is required to dynamically change the carrier network by the user equipment (UE) route selection policy (URSP) rule. In this case, it is difficult to use the carrier network with the existing schemes.

According to various embodiments, an electronic device and an operation method thereof may store application identification information for using a carrier network and establish a protocol data unit (PDU) session based on the application identification information and/or perform data transmission/reception through the PDU session.

### [Technical Solution]

According to various example embodiments, an electronic device may comprise a memory and at least one processor configured to obtain identification information for at least one application allowed to use a carrier network and store the obtained identification information for the at least one application in the memory, identify a network connection request from a first application executed by the at least one processor, determine whether identification information for the first application corresponds to the stored identification information for the at least one application, based on the identification of the network connection request, establish a protocol data unit (PDU) session associated with the carrier network, based on the identification information for the first application corresponding to the stored identification information for the at least one application, and control the electronic device to transmit/receive data associated with the first application, using the PDU session associated with the carrier network.

According to various example embodiments, a method for operating an electronic device may comprise: obtaining identification information for at least one application allowed to use a carrier network and storing the obtained identification information for the at least one application, identifying a network connection request from a first application executed by the electronic device, determining whether identification information for the first application corresponds to the stored identification information for the at least one application, based on the identification of the network connection request, establishing a protocol data unit (PDU) session associated with the carrier network, based on the identification information for the first application corresponding to the stored identification information for the at least one application, and transmitting/receiving data associated with the first application, using the PDU session associated with the carrier network.

### [Advantageous Effects]

According to various example embodiments, there may be provided an electronic device and an operation method thereof which may store application identification information for using a carrier network and establish a protocol data unit (PDU) session based on the application identification information and/or perform data transmission/reception through the PDU session.

### [Description of the Drawings]

FIG. 1 is a block diagram illustrating an electronic device in a network environment according to various embodiments;
FIG. 2A is a block diagram illustrating an electronic device for supporting legacy network communication and 5G network communication according to various embodiments;
FIG. 2B is a block diagram illustrating an electronic device for supporting legacy network communication and 5G network communication according to various embodiments;
FIG. 3A illustrates a 5G system structure;
FIG. 3B illustrates a 5G network slice structure;
FIG. 4 is a block diagram illustrating an example of an electronic device according to various embodiments;
FIG. 5 is a flowchart illustrating an example method of operating an electronic device according to various embodiments;
FIG. 6 is a block diagram illustrating an example of an electronic device according to various embodiments;
FIG. 7A is a flowchart illustrating an example method of operating an electronic device according to various embodiments;
FIG. 7B is a block diagram illustrating an example of an electronic device that receives application identification information from an operator network, according to various embodiments;
FIG. 8 is a block diagram illustrating an example of an electronic device that receives application identification information from an operator network, according to various embodiments;
FIG. 9 is a block diagram illustrating an example of an electronic device that obtains previously stored application identification information, according to various embodiments;
FIG. 10 is a block diagram illustrating an example of an electronic device storing application identification information according to various embodiments;
FIG. 11 is a flowchart illustrating an example method of operating an electronic device according to various embodiments;
FIG. 12 is a block diagram illustrating an example of an electronic device storing application identification information according to various embodiments;
FIG. 13 is a block diagram illustrating an example of an electronic device storing application identification information according to various embodiments; and
FIG. 14 is a flowchart illustrating an example method of operating an electronic device according to various embodiments.

### [Mode for Invention]

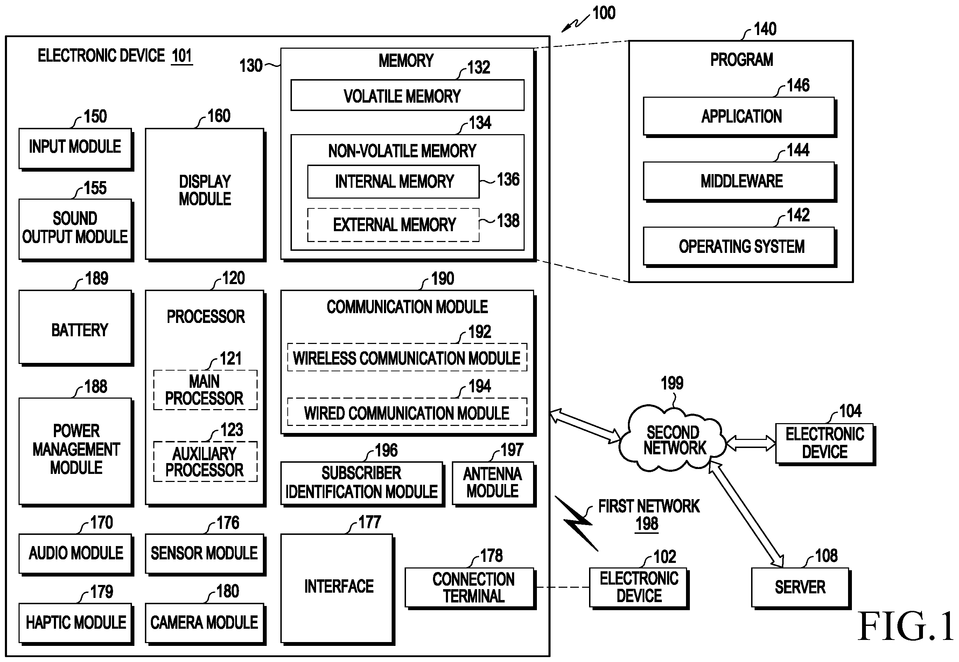

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

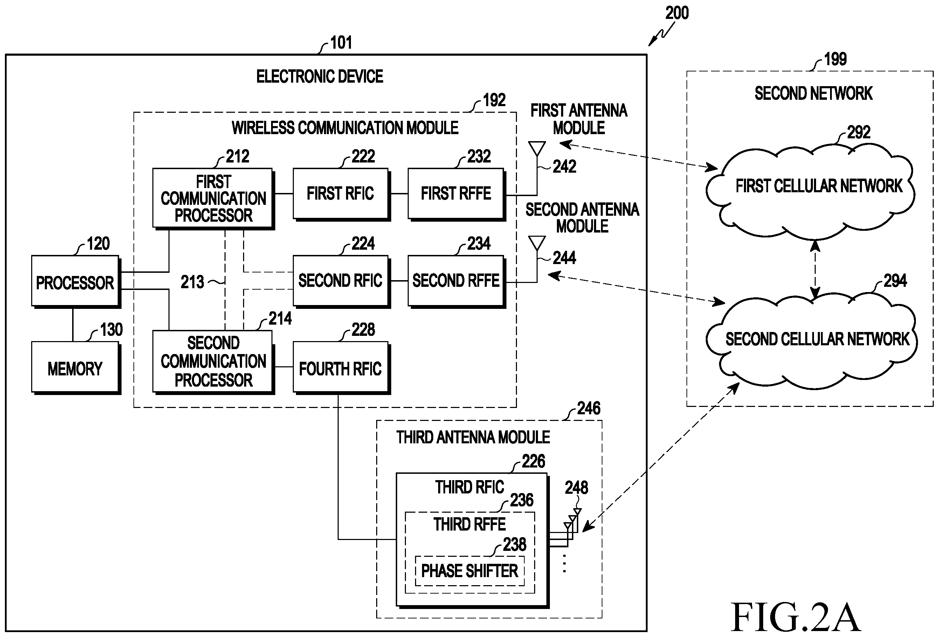

FIG. 2A is a block diagram 200 illustrating an example of an electronic device 101 supporting legacy network communication and 5G network communication according to various embodiments. Referring to FIG. 2A, the electronic device 101 may include a first communication processor (e.g., including processing circuitry) 212, a second communication processor (e.g., including processing circuitry) 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include a processor 120 and a memory 130. The second network 199 may include a first cellular network 292 and a second cellular network 294. According to another embodiment, the electronic device 101 may further include at least one component among the components of FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least part of the wireless communication module 192. According to another embodiment, the fourth RFIC 228 may be omitted or be included as part of the third RFIC 226.

The first communication processor 212 may establish a communication channel of a band that is to be used for wireless communication with the first cellular network 292 or may support legacy network communication via the established communication channel. According to various embodiments, the first cellular network may be a legacy network that includes second generation (2G), third generation (3G), fourth generation (4G), or long-term evolution (LTE) networks. The second CP 214 may establish a communication channel corresponding to a designated band (e.g., from about 6GHz to about 60GHz) among bands that are to be used for wireless communication with the second cellular network 294 or may support fifth generation (5G) network communication via the established communication channel. According to an embodiment, the second cellular network 294 may be a 5G network defined by the 3rd generation partnership project (3GPP). Additionally, according to an embodiment, the first CP 212 or the second CP 214 may establish a communication channel corresponding to another designated band (e.g., about 6GHz or less) among the bands that are to be used for wireless communication with the second cellular network 294 or may support fifth generation (5G) network communication via the established communication channel.

The first communication processor 212 may perform data transmission/reception with the second communication processor 214. For example, data classified as transmitted via the second cellular network 294 may be changed to be transmitted via the first cellular network 292. In this case, the first communication processor 212 may receive transmission data from the second communication processor 214. For example, the first communication processor 212 may transmit/receive data to/from the second communication processor 214 via an inter-processor interface 213. The inter-processor interface 213 may be implemented as, e.g., universal asynchronous receiver/transmitter (UART) (e.g., high speed-UART (HS-UART)) or peripheral component interconnect bus express (PCIe) interface, but is not limited to a specific kind. The first communication processor 212 and the second communication processor 214 may exchange packet data information and control information using, e.g., a shared memory. The first communication processor 212 may transmit/receive various pieces of information, such as sensing information, output strength information, or resource block (RB) allocation information, to/from the second communication processor 214.

According to implementation, the first communication processor 212 may not be directly connected with the second communication processor 214. In this case, the first communication processor 212 may transmit/receive data to/from the second communication processor 214 via a processor 120 (e.g., an application processor). For example, the first communication processor 212 and the second communication processor 214 may transmit/receive data to/from the processor 120 (e.g., an application processor) via an HS-UART interface or PCIe interface, but the kind of the interface is not limited thereto. The first communication processor 212 and the second communication processor 214 may exchange control information and packet data information with the processor 120 (e.g., an application processor) using a shared memory.

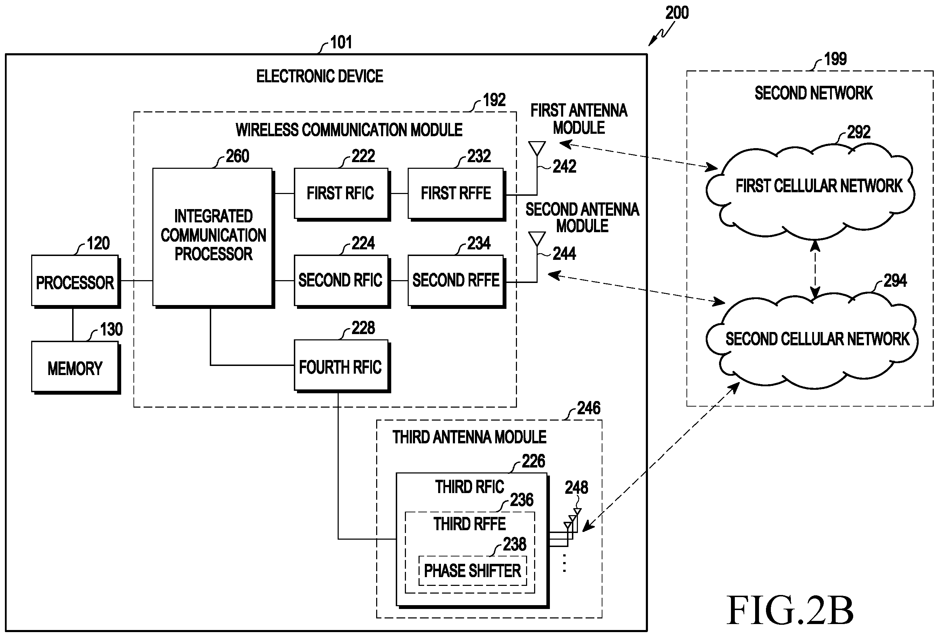

According to an embodiment, the first communication processor 212 and the second communication processor 214 may be implemented in a single chip or a single package. According to an embodiment, the first communication processor 212 or the second communication processor 214, along with the processor 120, an assistance processor 123, or communication module 190, may be formed in a single chip or single package. For example, as shown in FIG. 2B, a communication processor 260 may support all of the functions for communication with the first cellular network 292 and the second cellular network 294.

Upon transmission, the first RFIC 222 may convert a baseband signal generated by the first communication processor 212 into a radio frequency (RF) signal with a frequency ranging from about 700MHz to about 3GHz which is used by the first cellular network 292 (e.g., a legacy network). Upon receipt, the RF signal may be obtained from the first network 292 (e.g., a legacy network) through an antenna (e.g., the first antenna module 242) and be pre-processed via an RFFE (e.g., the first RFFE 232). The first RFIC 222 may convert the pre-processed RF signal into a baseband signal that may be processed by the first communication processor 212.

Upon transmission, the second RFIC 224 may convert the baseband signal generated by the first communication processor 212 or the second communication processor 214 into a Sub6-band (e.g., about 6GHz or less) RF signal (hereinafter, "5G Sub6 RF signal") that is used by the second cellular network 294 (e.g., a 5G network). Upon receipt, the 5G Sub6 RF signal may be obtained from the second cellular network 294 (e.g., a 5G network) through an antenna (e.g., the second antenna module 244) and be pre-processed via an RFFE (e.g., the second RFFE 234). The second RFIC 224 may convert the pre-processed 5G Sub6 RF signal into a baseband signal that may be processed by a corresponding processor of the first communication processor 212 and the second communication processor 214.

The third RFIC 226 may convert the baseband signal generated by the second communication processor 214 into a 5G Above6 band (e.g., about 6GHz to about 60GHz) RF signal (hereinafter, "5G Above6 RF signal") that is to be used by the second cellular network 294 (e.g., a 5G network). Upon receipt, the 5G Above6 RF signal may be obtained from the second cellular network 294 (e.g., a 5G network) through an antenna (e.g., the antenna 248) and be pre-processed via the third RFFE 236. The third RFIC 226 may convert the pre-processed 5G Above6 RF signal into a baseband signal that may be processed by the second communication processor 214. According to an embodiment, the third RFFE 236 may be formed as part of the third RFIC 226.

According to an embodiment, the electronic device 101 may include the fourth RFIC 228 separately from, or as at least part of, the third RFIC 226. In this case, the fourth RFIC 228 may convert the baseband signal generated by the second communication processor 214 into an intermediate frequency band (e.g., from about 9GHz to about 11GHz) RF signal (hereinafter, "IF signal") and transfer the IF signal to the third RFIC 226. The third RFIC 226 may convert the IF signal into a 5G Above6 RF signal. Upon receipt, the 5G Above6 RF signal may be received from the second cellular network 294 (e.g., a 5G network) through an antenna (e.g., the antenna 248) and be converted into an IF signal by the third RFIC 226. The fourth RFIC 228 may convert the IF signal into a baseband signal that may be processed by the second communication processor 214.

According to an embodiment, the first RFIC 222 and the second RFIC 224 may be implemented as at least part of a single chip or single package. According to various embodiments, when the first RFIC 222 and the second RFIC 224 in FIG. 2A or 2B are implemented as a single chip or a single package, they may be implemented as an integrated RFIC. In this case, the integrated RFIC is connected to the first RFFE 232 and the second RFFE 234 to convert a baseband signal into a signal of a band supported by the first RFFE 232 and/or the second RFFE 234, and may transmit the converted signal to one of the first RFFE 232 and the second RFFE 234. According to an embodiment, the first RFFE 232 and the second RFFE 234 may be implemented as at least part of a single chip or single package. According to an embodiment, at least one of the first antenna module 242 or the second antenna module 244 may be omitted or be combined with another antenna module to process multi-band RF signals.

According to an embodiment, the third RFIC 226 and the antenna 248 may be disposed on the same substrate to form the third antenna module 246. For example, the wireless communication module 192 or the processor 120 may be disposed on a first substrate (e.g., a main painted circuit board (PCB)). In this case, the third RFIC 226 and the antenna 248, respectively, may be disposed on one area (e.g., the bottom) and another (e.g., the top) of a second substrate (e.g., a sub PCB) which is provided separately from the first substrate, forming the third antenna module 246. Placing the third RFIC 226 and the antenna 248 on the same substrate may shorten the length of the transmission line therebetween. This may reduce a loss (e.g., attenuation) of high-frequency band (e.g., from about 6GHz to about 60GHz) signal used for 5G network communication due to the transmission line. Thus, the electronic device 101 may enhance the communication quality with the second network 294 (e.g., a 5G network).

According to an embodiment, the antenna 248 may be formed as an antenna array which includes a plurality of antenna elements available for beamforming. In this case, the third RFIC 226 may include a plurality of phase shifters 238 corresponding to the plurality of antenna elements, as part of the third RFFE 236. Upon transmission, the plurality of phase shifters 238 may change the phase of the 5G Above6 RF signal which is to be transmitted to the outside (e.g., a 5G network base station) of the electronic device 101 via their respective corresponding antenna elements. Upon receipt, the plurality of phase shifters 238 may change the phase of the 5G Above6 RF signal received from the outside to the same or substantially the same phase via their respective corresponding antenna elements. This enables transmission or reception via beamforming between the electronic device 101 and the outside.

The second cellular network 294 (e.g., a 5G network) may be operated independently (e.g., as standalone (SA)) from, or in connection (e.g., as non-standalone (NSA)) with the first cellular network 292 (e.g., a legacy network). For example, the 5G network may include access networks (e.g., 5G access networks (RANs)) but lack any core network (e.g., a next-generation core (NGC)). In this case, the electronic device 101, after accessing a 5G network access network, may access an external network (e.g., the Internet) under the control of the core network (e.g., the evolved packet core (EPC)) of the legacy network. Protocol information (e.g., LTE protocol information) for communication with the legacy network or protocol information (e.g., New Radio (NR) protocol information) for communication with the 5G network may be stored in the memory 230 and be accessed by other components (e.g., the processor 120, the first communication processor 212, or the second communication processor 214).

As used herein, terms for identifying access nodes, terms denoting network entities, terms denoting messages, terms denoting inter-network entity interfaces, and terms denoting various pieces of identification information are provided as an example for ease of description. For ease of description, various embodiments of the disclosure adopts terms and names defined in 5G system standards. However, the disclosure is not limited by such terms and names and may be likewise applicable to systems conforming to other standards. The description of embodiments of the disclosure focuses primarily on 3GPP communication standards, but the subject matter of the disclosure may also be applicable to other communication systems with a similar technical background with minor changes without significantly departing from the scope of the disclosure and this may be so performed by the determination of those skilled in the art to which the disclosure pertains.

General communication systems have been designed independently from applications provided on the communication systems. The user accesses the communication system and then selects an application which the user intends to use and receives service. With the development of network function virtualization (NFV), software defined network (SDN) or such techniques, communication technology evolves to be able to configure a network slice optimized for the nature of each application over a single huge network.

One network slice is configured of an end-to-end (E2E) logical network including an electronic device 101 and an opposite node (an opposite electronic device or an opposite application server).

The user may access a network specified for the application which the user is using and receive a service. For example, the user's UE may simultaneously access one or more network slices.

The 3GPP which is in charge of mobile communication standardization has completed the 5G phase I standard which encompasses network slicing functions. Rel-16 goes on with the network slicing phase II standard.

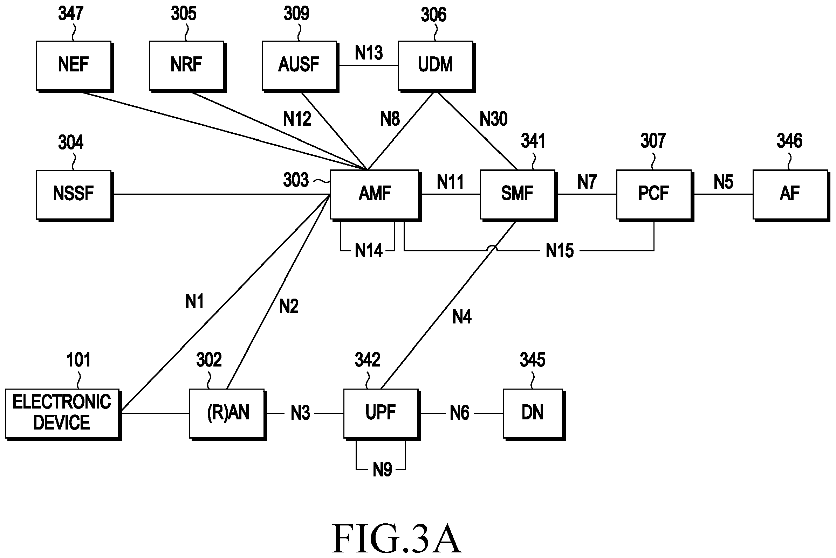

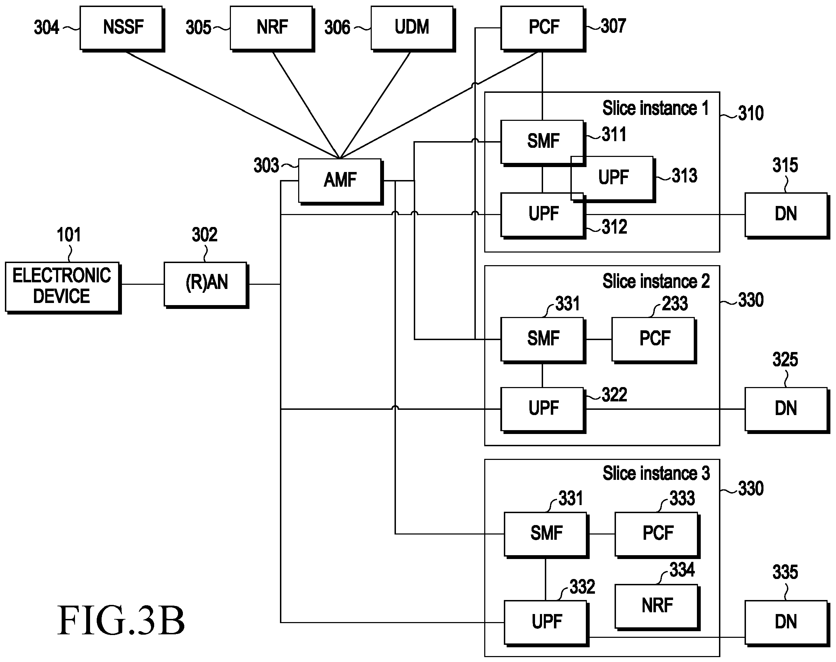

FIG. 3A illustrates a 5G system structure. FIG. 3B illustrates a 5G network slice structure. Hereinafter, the overall 5G system is described and then network slices are described with reference to FIGS. 3A and 3B.

Referring to FIG. 3A, a 5G system structure may include, as network elements, an electronic device 101 (e.g., a user equipment (UE)), a radio access network ((R)AN) 302, a data network (DN) 345, and a plurality of network functions (NFs) inside a core network (CN).

In the 5G system architecture, functions, connection points, or protocols may be defined for the plurality of NFs. The 5G system structure may be shown with reference points indicating service-based interfaces corresponding to the NFs and reference points indicating interactions present among the NFs.

The plurality of network functions (NFs) may include an authentication server function (AUSF) 309, an access and mobility management function (AMF) 303, a network exposure function (NEF) 347, a network function repository function (NRF) 305, a policy control function (PCF) 307, a session management function (SMF) 341, a unified data management (UDM) 306, a user plane function (UPF) 342, an application function (AF) 346, and a network slice selection function (NSSF) 304.

According to various embodiments of the disclosure, the AMF, SMF, PCF, and UPF may play a key role in establishing a UE-requested protocol data unit (PDU) session and managing traffic between the UE and the DN.

The reference point between the electronic device 101 and the AMF 303 is defined as N1.

The (R)AN 302 may represent a base station that uses radio access technology (RAT). For example, the AN 302 may be a base station with 3GPP access technology or a base station with non-3GPP access technology, such as Wi-Fi. The reference point between the AN 302 and the AMF 303 is defined as N2, and the reference point between the AN and the UPF 342 is defined as N3.

The DN 345 may deliver PDUs, which are to be sent on downlink, to the UPF 342 or receive PDUs from the electronic device 101 via the UPF 342. The reference point between the DN 345 and the UPF 342 is defined as N6.

The AMF 303 may provide access and mobility management functionality independently of access technology, e.g., per electronic device 101. The reference point between the AMF 303 and the electronic device 101 is defined as N1. The reference point between the AMF 303 and the (R)AN 302 is defined as N2. The reference point between the AMF 303 and the UDM 306 is defined as N8. The reference point between the AMF 303 and the AUSF 309 is defined as N12. The reference point between the AMF 303 and the SMF 341 is defined as N11.

The SMF 341 may provide session management functionality in which, where one electronic device 101 has several sessions, a different SMF is assigned per session to manage the sessions. The UPF 342 is set up using control signal information produced by the SMF 341. The N4 reference point is defined for the UPF 342 to be able to report its state to the SMF 341. The reference point between the SMF 341 and the AMF 303 is defined as N11, the reference point between the SMF 341 and the UDM 306 is defined as N10, the reference point between the SMF 341 and the PCF 305 is defined as N7, and the reference point between the SMF 341 and the AMF 303 is defined as N11.

For example, each electronic device 101 may connect to one AMF 303. For the SMF 341, one electronic device 101 may establish several sessions, and thus, a different SMF 311, 321, or 331 may be provided for each session.

To ensure quality of service (QoS), the AF 346 may provide information about packet flow to the PCF 307 which is in charge of policy control.

The PCF 307 may determine policy, e.g., session management or mobility management, based on the packet flow-related information for ensuring QoS and transfer it to the AMF 303 or SMF 341, thereby enabling proper mobility management, session management, or QoS management. The reference point between the AF 346 and the PCF 307 is defined as N5.

The AUSF 309 may store data for authenticating the electronic device 101.

The UDM 306 may store the user's subscription data and policy data. The reference point between the AUSF 309 and the UDM 306 is defined as N13, the reference point between the AUSF 309 and the AMF 303 is defined as N12, the reference point between the UDM 306 and the AMF 303 is defined as N8, and the reference point between the UDM 306 and the SMF 341 is defined as N10.

The CP functions may include various functions to control the network and UE. As two representative functions, the electronic device 101, the (R)AN 302, the UPF 342, the AMF 303, the AF 346, and the DN 345 in charge of mobility management functionality and the SMF 341 in charge of session management functionality are two independent functions and they may be included in the CP functions.

In describing various example embodiments of the disclosure, the terms "slice," "service," "network slice," network service," "application slice," and "application service" may be used interchangeably.

The mobile communication service carrier may assign network resources suited for the corresponding service per slice or per set of a particular slice. The network resources may refer, for example, to network functions (NFs) or logical resources or radio resource allocations provided by the network functions (NFs).

Network slicing is technology to allow for application of such properties as network isolation, customization, and independent management and orchestration to mobile communication core network architecture by bundling network resources and network functions into a single independent slice depending on the service.

Network slicing is a new concept for 5G core networks. Network slicing is technology which bundles network resources and network functions necessary for the service requested by the UE into a single independent slice.

By network slicing, the network service provider may make independent allocations of network resources specified for each service and user and secure the flexibility of network by software defined network (SDN) and network function virtualization (NFV)-based resource virtualization and hence expandability and reliability of service and network resource operation.

The public land mobile network (PLMN) may provide several network slices, and each network slice may be provided to the UE in the form of a slice instance. For example, referring to FIG. 3B, the PLMN may include slice instance 1 310, slice instance 2 320, and slice instance 3 330.

The electronic device 101 may access the network to receive a service from at least one of the several slice instances simultaneously or sequentially.

Each slice instance may include network resources necessary to provide the corresponding network slice. For example, slice instance 1 310 may include an SMF 311 and UPFs 312 and 313, slice instance 2 320 may include an SMF 321, a UPF 322, and a PCF 323, and slice instance 3 330 may include an SMF 331, a UPF 332, a PCF 333, and an NRF 334.

Referring to FIGS. 3A and 3B, the SMF 321 of slice instance 2 320 may be connected to a PCF 307 of PLMN level and the PCF 323 of slice level. The PCF 307 of PLMN level may manage policy information about the PLMN level and provide it to the SMF 321. The PCF 323 of slice level which belongs to slice instance 2 may manage the policy required to provide the corresponding slice and provide the corresponding information to the SMF 321.

Each slice may be identified with a slice identity (ID). As an example, the slice ID may be single-network slice selection assistance information (S-NSSAI) defined by the 3GPP. According to various embodiments, the electronic device 101 may store configured network slice selection assistance information (NSSAI) and network slice selection policy (NSSP)-related information. The configured NSSAI 101 may be configured of an S-NSSAI list for network slices of subscription to the home PLMN (HPLMN) by the electronic device 101. The S-NSSAI list may include at least one S-NSSAI #id. For example, the S-NSSAI list may include S-NSSAI #a, S-NSSAI #b, S-NSSAI #c, and S-NSSAI #d. Since the configured NSSAI is determined based on the electronic device 101's subscription information, the S-NSSAI constituting the configured NSSAI may differ per electronic device 101. Further, since the configured NSSAI is determined based on the subscription information for the electronic device 101, if the subscription information for the electronic device 101 is changed, the configured NSSAI stored in the electronic device 101 may also be changed. The S-NSSAI list subscribed to by the electronic device 101 constituting the configured NSSAI may be stored in the integrated UDM 306 storing subscription information for the electronic device 101. The S-NSSAI subscribed to by the electronic device 101 stored in the UDM 306 may be referred to as 'subscribed S-NSSAI'. The NSSP 101 represents mapping information between the electronic device 101-subscribed S-NSSAI (S-NSSAI #id) and the application which the corresponding S-NSSAI may support. One S-NSSAI #id may be mapped to at least one application. For example, S-NSSAI #a may be mapped to App #1 and App #2, S-NSSAI #b to App #1, S-NSSAI #c to App #3, and S-NSSAI # to all applications supportable. The NSSP may be stored in the policy control function (PCF) storing the electronic device 101 and network-related policy information. Or, the NSSP may be stored in the user data repository (UDR), and the PCF may, as necessary, send a request for NSSP information to the UDR and obtain the NSSP information from the UDR. When the subscription information for the electronic device 101 varies, a variation may be made to the electronic device 101 subscribed S-NSSAI information stored in the UDM 306. When the subscription information for the electronic device 101 varies, the NSSP information stored in the PCF or UDR may be varied. If at least one of subscribed S-NSSAI or NSSP varies, the relevant configuration information stored in the electronic device 101 need update.

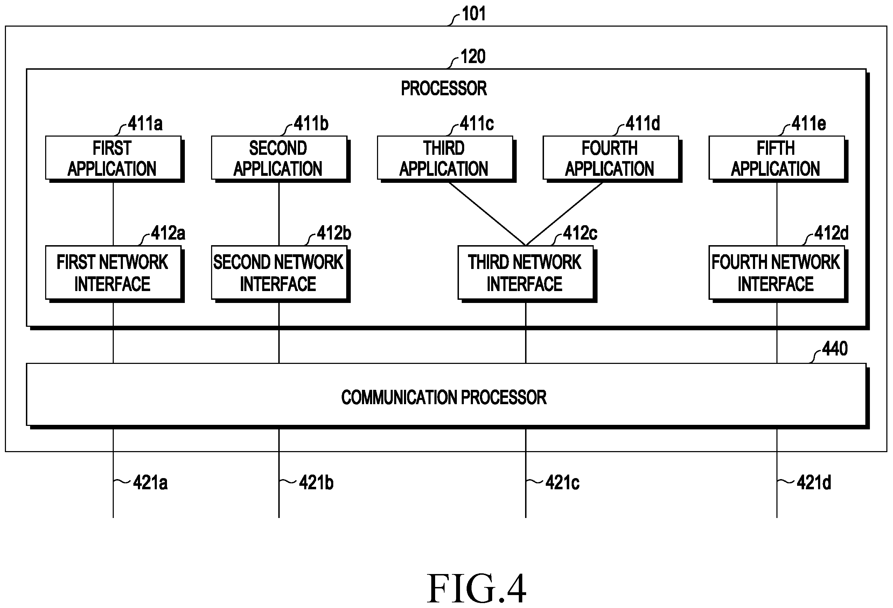

FIG. 4 is a block diagram illustrating an example of an electronic device according to various embodiments.

According to various embodiments, at least one of a first application 411a, a second application 411b, a third application 411c, a fourth application 411d, and/or a fifth application 411e may be executed on the processor 120. For example, the first application 411a may be an application for using a carrier network. For example, the second application 411b, the third application 411c, and the fourth application 411d are applications that support general data transmission and reception and may be applications associated with, e.g., the data network name (DNN) of the Internet. For example, the fifth application 411e is an application for using a system network and may be an application associated with, e.g., the DNN of the internet protocol multimedia subsystem (IMS).

According to various embodiments, the communication processor 440 (e.g., at least one of the first communication processor 212, the second communication processor, or the integrated communication processor 260) may establish a first PDU session 421a corresponding to a carrier network. For example, if a network connection of the first application 411a is requested, the electronic device 101 (e.g., the processor 120 and/or the communication processor 440) may establish the first PDU session 421a corresponding to the carrier network. If it is determined that the first application 411a may use the carrier network, the electronic device 101 may establish the first PDU session 421a corresponding to the carrier network. A configuration in which the electronic device 101 determines whether the first application 411a may use the carrier network is described below. Meanwhile, it is merely a non-limiting example that the first PDU session 421a is established based on the network connection request of the first application 411a, and the time of establishment is not specifically limited. If the first PDU session 421a corresponding to the carrier network has already been established, the electronic device 101 may associate the first application 411a with the first PDU session 421a in response to the network connection request from the first application 411a. The electronic device 101 may associate the first application 411a with the first PDU session 421a based on identifying that the first application 411a has the authority to use the carrier network.

According to various embodiments, the electronic device 101 may form a first network interface 412a for transmission/reception of data packets between the processor 120 and the communication processor 440. For example, the processor 120 may provide a data packet from the first application 411a to the communication processor 440 through the first network interface 412a. It will be appreciated by one of ordinary skill in the art that a TCP/IP layer (not shown) is defined between the applications 411a, 411b, 411c, 411d, and 411e and the network interfaces 412a, 412b, 412c, and 412d so that data packets may be transmitted/received through TCP/IP. The communication processor 440 may transmit the data packet provided through the first network interface 412a using the first PDU session 421a. It will be understood by one of ordinary skill in the art that a signal corresponding to the data packet from the communication processor 440 may be transmitted to the outside through an RF circuit (e.g., an RFIC, an RFFE, and/or an antenna module). Alternatively, the communication processor 440 may provide a data packet corresponding to the signal received through the first PDU session 421a to the processor 120 through the first network interface 412a. The processor 120 may provide the data packet received through the first network interface 412a to the first application 411a matched thereto. The "network interface" may be, e.g., a logical interface for data transmission/reception between the processor 120 and the communication processor 440 and may be named, e.g., "rmnet".

As described above, according to various embodiments, upon identifying a network connection request (e.g., requestNework) from the first application 411a, the electronic device 101 may identify the authority to use the carrier network of the application 411a based on at least some of schemes to be described below. The network connection request may include information indicating that the carrier network is used, but in another embodiment, the network connection request may not include information indicating that the carrier network is used. If the first application 411a is identified as being able to use the carrier network, the electronic device 101 may establish a first PDU session 421a corresponding to the carrier network or associate the first application 411a to the first PDU session 421a corresponding to an already established carrier network. If a connection request to the carrier network is identified from an application (e.g., the second application 411b) without an authority to use the carrier network, the electronic device 101 may not allow the application to use the first PDU session 421a. If the first PDU session 421a is not previously established, the electronic device 101 may not establish a first PDU session 421a in response to a network connection request from the second application 411b. The electronic device 101 may establish a PDU session (e.g., the second PDU session 421b) corresponding to the second application 411b or may associate the second application 411b with the second PDU session 421b. If the first PDU session 421a has been established, the electronic device 101 may not associate the second application 411b with the first PDU session 421a in response to a network connection request from the second application 411b.

According to various embodiments, the electronic device 101 may establish the second PDU session 421b or associate the second application 411b with the previously established second PDU session 421b based on a network connection request of the second application 411b. The second application 411b may be associated with, e.g., Internet DNN, and may also be associated with the slice type of eMBB. For example, the electronic device 101 may receive the URSP rule from the PCF (e.g., the PCF 307 of FIGS. 3A and 3B) through the AMF (e.g., the AMF 303 of FIGS. 3A and 3B). The URSP rule may include a traffic descriptor and/or a route selection descriptor. For example, an application identifier of the second application 411b may be included in the traffic descriptor of the URSP rule, and that the Internet DNN and the slice type of eMBB may be included in the route selection descriptor. The electronic device 101 may associate the second application 411b with the second PDU session 421b based on the URSP. The electronic device 101 may perform data transmission/reception between the second application 411b and the second PDU session 421b through the second network interface 412b. The second PDU session 421b may be associated with, e.g., a network slice of the Internet DNN and the slice type of eMBB.

According to various embodiments, the electronic device 101 may establish the third PDU session 421c or associate the third application 411c with the previously established third PDU session 421c based on a network connection request of the third application 411c. The electronic device 101 may establish the third PDU session 421c or associate the fourth application 411d with the previously established third PDU session 421c based on a network connection request of the fourth application 411d. The third application 411c and the fourth application 411d may be associated with, e.g., Internet DNN, and may also be associated with the slice type of URLLC. For example, the traffic descriptor of the URSP rule managed by the electronic device 101 may include application identifiers of the third application 411c and the fourth application 411d, and the route selection descriptor may contain the Internet DNN and the slice type of URLLC. The electronic device 101 may associate the third application 411c and the fourth application 411d with the third PDU session 421c based on the URSP. The electronic device 101 may perform data transmission/reception between the third application 411c and the fourth application 411d and the third PDU session 421c through the third network interface 412c. The third PDU session 421c may be associated with, e.g., a network slice of the Internet DNN and the slice type of URLLC.

According to various embodiments, the electronic device 101 may establish the fourth PDU session 421d or associate the fourth application 411d with the previously established fourth PDU session 421d based on a network connection request of the fifth application 411e. The fifth application 411e may be associated with, e.g., the IMS DNN. The electronic device 101 may associate the fifth application 411e with the second PDU session 421d based on allowing the use of the system network for the fifth application 411e.

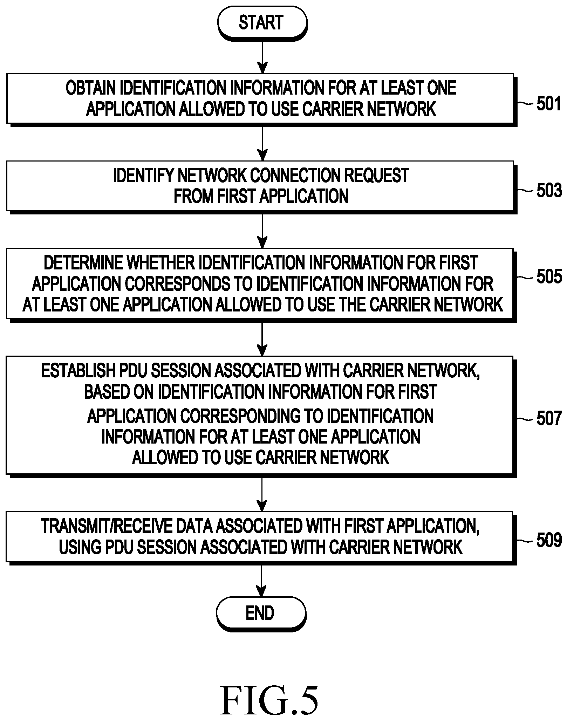

FIG. 5 is a flowchart illustrating an example method of operating an electronic device according to various embodiments.

According to various embodiments, the electronic device 101 (e.g., at least one of the processor 120, the first communication processor 212, the second communication processor 214, or the integrated communication processor 260) may obtain identification information for at least one application allowed to use the carrier network in operation 501. In one example, the electronic device 101 may obtain identification information for at least one application allowed to use the carrier network from the network, based on registration in the network. In one example, the electronic device 101 may obtain identification information for at least one application allowed to use the carrier network from a server operated by the operator. In one example, the electronic device 101 may obtain identification information for at least one application allowed to use the carrier network stored therein. In one example, the electronic device 101 may obtain identification information for at least one application allowed to use the carrier network from at least one of the processor 120, a memory (e.g., the memory 130 of FIG. 1) and/or a subscriber identification module (e.g., the subscriber identification module 196 of FIG. 1, a connected removable SIM, or an included embedded SIM). Each of the aforementioned plurality of examples is described below, and the above-described examples are merely examples, and obtaining identification information for at least one application allowed to use the carrier network is not limited to a specific scheme.

According to various embodiments, part of the identification information for the application allowed to use the carrier network may be deleted or modified, or identification information for a new application may be added. An updated application identification information list may be provided to the electronic device 101 by the operator. The electronic device 101 may receive the updated application identification information list and update the stored application identification information list. Accordingly, the application allowed to use the carrier network may be dynamically managed.

According to various embodiments, the electronic device 101 may store, as it is, or use, in a comparison operation, the identification information for at least one application received and/or read from the outside and/or inside or may convert the received and/or read identification information for at least one application and store, or use, in a comparison operation, the results of conversion. For example, the electronic device 101 may receive an application package name. The electronic device 101 (e.g., PackageManager) may convert the application package name into identification information managed by the operating system. The electronic device 101 may store and/or manage the application package name and/or identification information managed by the operating system as application identification information.

According to various embodiments, the electronic device 101 may identify a network connection request (e.g., requestNetwork) from a first application in operation 503. For example, the electronic device 101 may identify the requestNetwork from the first application, but there is no limitation on information for the network connection request. In operation 505, the electronic device 101 may determine whether the identification information for the first application corresponds to the identification information for at least one application allowed to use the carrier network. In operation 507, the electronic device 101 may establish a PDU session associated with the carrier network based on the identification information for the first application corresponding to the identification information for at least one application allowed to use the carrier network. For example, if the PDU session associated with the carrier network is not established, the electronic device 101 may determine that the identification information for the first application corresponds to the identification information for at least one application. Accordingly, the electronic device 101 may establish a PDU session associated with the carrier network. The electronic device 101 may notify the first application of establishment of the PDU session. The electronic device 101 may associate the established PDU session with the first application.

In a state where a PDU session corresponding to the carrier network has been already established, the first application may request network connection. In one example, after booting up, the electronic device 101 may be configured to establish a PDU session associated with the carrier network even when there is no network connection request. Even if the PDU session has already been established, the electronic device 101 may identify that the identification information for the first application corresponds to the identification information for at least one application. The electronic device 101 may associate the PDU session corresponding to the already established carrier network with the first application.

According to various embodiments, the network connection request from the first application may include information for specifying the carrier network. The information specifying the carrier network may be referred to as CarrierNetworkRequestSpecifier. As an example of CarrierNetworkRequestSpecifier, connection capability defined in 3GPP TS 24.526 may be used. For example, connection capability is a value that may indicate a network type, such as ims, mms, and internet, and may use one of previously defined values to indicate the carrier network or use a value other than the previously defined values to indicate the carrier network. Alternatively, if the first application uses requestNetwork, NetworkCapability based on requestNetwork may be defined. NetworkCapability may indicate, e.g., the type of IMS, MMS, and INTERNET, as well as the carrier network.

Meanwhile, NetworkCapability is merely an example of information that specifies the type of network, and other information (e.g., reason) in requestNetwork, information in an API distinguished from requestNetwork, and additional information for the application (e.g., the nature of use and/or category of application), and the capability of the 5G service used by the application is also available, without being limited to a specific type. The electronic device 101 may determine whether the application providing the corresponding information is an application allowed to use the carrier network based on it being identified that the information for specifying the carrier network is included.

Alternatively, in another embodiment, the first application may request a network connection without specifying information indicating the type of the carrier network. The first application may use requestNetwork where the type of network is not specified. The electronic device 101 may determine whether the corresponding application is an application allowed to use the carrier network based on identification of a network connection request from the application.

According to various embodiments, in operation 509, the electronic device 101 may transmit/receive data associated with the first application using a PDU session associated with the carrier network. Based on the association of the first application with the PDU session associated with the carrier network, the electronic device 101 may transmit/receive data associated with the first application using the PDU session associated with the carrier network.

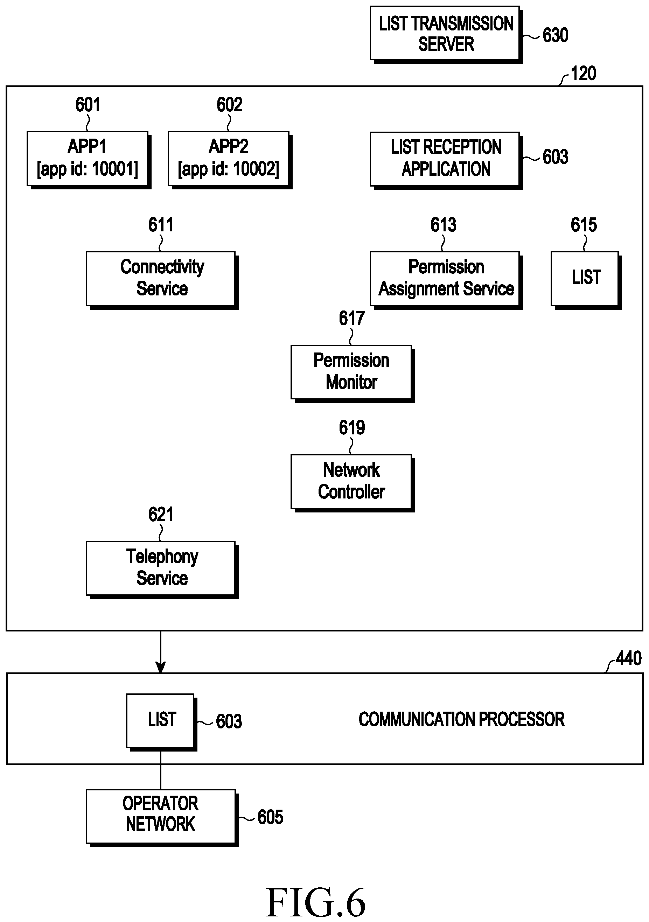

FIG. 6 is a block diagram illustrating an example of an electronic device according to various embodiments.

According to various embodiments, applications 601 and 602 may be executed on the processor 120. Among them, e.g., the second application 602 may be an application for using a carrier network. The applications 601 and 602 may be executed, e.g., on an application (e.g., application 146 of FIG. 1) layer, but is not limited thereto. The applications 601 and 602 executed on the processor 120 may transmit/receive data to and from the operator network 605 through the communication processor 440. For example, the application ID of the first application 601 may be "10001," and the application ID of the second application 602 may be "10002". "10001" and "10002" may be, e.g., application IDs whose package name has been converted by PackageManager. Meanwhile, it is merely an example that the application is identified by the converted application ID, and the applications 601 and 602 may be identified and managed based on the package name.

According to various embodiments, at least one of a ConnectivityService 611, a PermissionAssignmentService 613, a PermissionMonitor 617, a NetworkController 619, or a TelephonyService 621 may be executed on the processor 120. The operation of at least one of the ConnectivityService 611, PermissionAssignmentService 613, PermissionMonitor 617, NetworkController 619, or TelephonyService 621 may refer, for example, to the operation of the application processor (e.g., the processor 120) or the electronic device 101.

According to various embodiments, the ConnectivityService 611 may identify whether the application requesting the use of the carrier network has authority through, e.g., the PermissionAssignmentService 613. The ConnectivityService 611 may inform the application requesting use of the carrier network of the result of the identification. Alternatively, if a network connection is requested from an arbitrary application (e.g., upon receiving a requestNetwork), the Connectivity Service 611 may identify whether the application requesting the use of the carrier network has authority through, e.g., the PermissionAssignmentService 613. The ConnectivityService 611 may transfer information (e.g., a descriptor) necessary for generation of a PDU session required for the application to use the carrier network to the TelephonyService 621. The ConnectivityService 611 may connect the application allowed to use the carrier network to the carrier network (e.g., a PDU session) through the NetworkController 619. A network interface may also be configured corresponding to the PDU session and, based thereupon, the processor 120 and the communication processor 440 may transmit and receive data.

According to various embodiments, the PermissionAssignmentService 613 may store the application identification information obtained by at least one scheme. The application identification information may be implemented in the form of a list or may be implemented in the form of a traffic descriptor in the URSP rule, but is not limited to a specific implementation format. The PermissionAssignmentService 613 may update the stored application identification information to the NetworkController 619. For example, the PermissionAssignmentService 613 may update the application identification information to the NetworkController 619 through the PermissionMonitor 617. The PermissionAssignmentService 613 may determine whether the application has authority to use the carrier network.

According to various embodiments, the PermissionMonitor 617 may monitor environmental changes (e.g., at least one of addition, deletion, or change of application and/or user information) in the electronic device 101 and may manage and store allowed information in response to environmental changes. The PermissionMonitor 617 may update the application identification information to the NetworkController 619 based on the application identification information transferred from the PermissionAssignmentService 613.

According to various embodiments, the TelephonyService 621 may be included in, e.g., a radio interface layer (RIL). If identification information for the application allowed to use the carrier network is received from the communication processor 440, the TelephonyService 621 may transfer the identification information to the PermissionAssignmentService 613. The TelephonyService 621 may provide information necessary for establishing a PDU session to the communication processor 440 when the application requests a PDU session required to use the carrier network.

According to various embodiments, the NetworkController 619 may store information regarding whether to allow each application identification information transferred through the PermissionMonitor 617. For example, the NetworkController 619 may associate the application identification information with whether to allow the carrier network and store them. The NetworkController 619 may reference the stored information if use for the carrier network is requested from an application. The NetworkController 619 may determine whether identification information for an application requesting use of the carrier network is included in the referenced information. The NetworkController 619 may connect the application and the carrier network based on the result of determination. The NetworkController 619 may determine whether to allow not only the carrier network but also other types of networks. In the NetworkController 619, the application identification information and information for the network type allowed for the corresponding application may be stored in association with each other. Based on this, the NetworkController 619 may provide a permission for a specific network and may provide a permission for the carrier network (CarrierNetworkPermission) as an example.

According to various embodiments, the communication processor 440 may transfer the application identification information (e.g., a list) transferred from the operator network 605 to the application processor (e.g., the processor 120). The communication processor 440 may read identification information allowed for the carrier network from a specific memory area in the communication processor 440 or a SIM card. The communication processor 440 may transfer the identification information for the application allowed for the carrier network to the PermissionAssignmentService 613. If the communication processor 440 receives a request to establish a PDU session from the processor 120, the communication processor 440 may establish a PDU session based on information from the processor 120.

According to various embodiments, a list reception application 603 may receive identification information (e.g., a list) of at least one application allowed to use the carrier network from a list transmission server 630. For example, the list reception application 603 may be included in the application (e.g., the application 146 of FIG. 1) layer or the middleware (e.g., the middleware 144 of FIG. 1) layer. The list reception application 603 may be an application provided by the communication operator. The list reception application 603 transmits an identification information request to the list transmission server 630 based on the user's request input or a request from another app and, in response thereto, receive the identification information for at least one application allowed to use the carrier network from the transmission server 630. Alternatively, the list reception application 603 may periodically transmit an identification information request or may transmit an identification information request based on an event defined on its own. As described above, the list reception application 603 may receive the list from the list transmission server 630 even without an identification information request. The list transmission server 630 is a server operated by the operator and may store the identification information for the application allowed to use the carrier network and transmit it to the electronic device 101. If the permitted application is updated, the list transmission server 630 may transmit the updated application identification information to the electronic device 101. The list transmission server 630 may transmit application identification information to the electronic device 101 in response to a request from the electronic device 101 or based on a push scheme. The list reception application 603 may transfer the obtained application identification information to the PermissionAssignmentService 613.

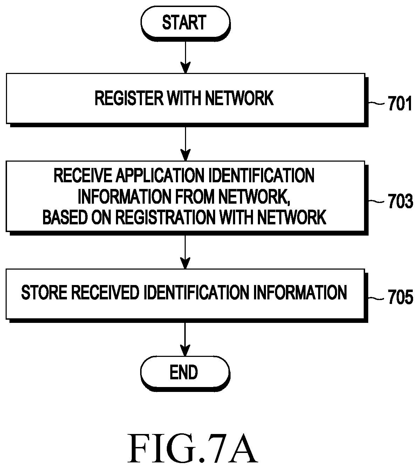

FIG. 7A is a flowchart illustrating an example method of oerating an electronic device according to various embodiments.

According to various embodiments, an electronic device 101 (e.g., at least one of the processor 120, the first communication processor 212, the second communication processor 214, or the communication processor 440) may register in a network in operation 701. For example, the electronic device 101 may transmit a registration request message to the network (e.g., the AMF). If the network permits registration, the network may transmit a registration accept message to the electronic device 101. The electronic device 101 may transmit a registration complete message to the network so that the electronic device 101 may register in the electronic device 101.

According to various embodiments, in operation 703, the electronic device 101 may receive application identification information from the network based on the network registration. The electronic device 101 may receive, e.g., a URSP rule from the PCF. Table 1 is an example of the URSP rule.

**[Table 1]**

| Traffic Descriptor: | Route Selection Descriptor |
|---|---|
| Application Identifiers=identifier of second application | DNN Selection: "20201" |

The URSP rule received from the network may include a traffic descriptor and a route selection descriptor. The traffic descriptor may include, e.g., the identifier of the second application. The identifier of the second application may include, e.g., OSAppID and/or OSId according to 3GPP TS 23.503, but the format is not limited. The route selection descriptor may include, e.g., information indicating a DNN of "20201." "20201" may be, e.g., a character representing the carrier network, but this is merely an example character and is not limited to a specific implementation. The URSP rule shown in Table 1 may refer, for example, to the traffic of the second application should be transmitted through a PDU session associated with the carrier network. The electronic device 101 may identify identification information for the application allowed to use the carrier network based on the URSP rule as shown in Table 1. Meanwhile, transmission and reception of the identification information for the application allowed to use the carrier network based on the URSP rule is merely an example, and is not limited to a specific transmission and reception scheme. According to various embodiments, the electronic device 101 may store the received application identification information in operation 705. The electronic device 101 may store, e.g., the package name of the application, as it is, or may store OS-based identification information corresponding to the package name. Later, if a network connection is requested from a specific application, the electronic device 101 may refer to the stored application identification information. Based on the reference result, the electronic device 101 may determine whether to establish a carrier network and/or whether to associate a specific application with a PDU session corresponding to the carrier network.

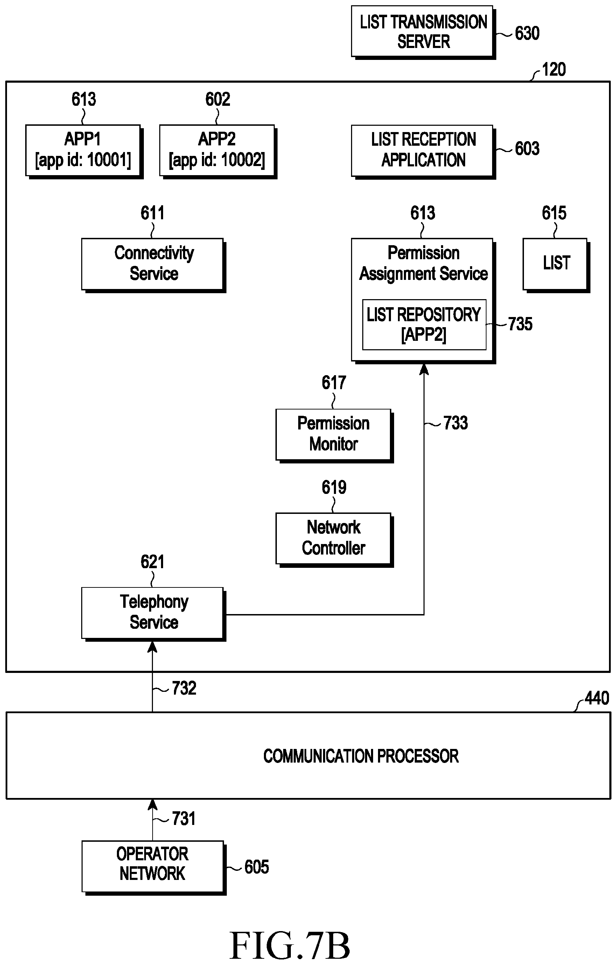

FIG. 7B is a block diagram illustrating an example of an electronic device that receives application identification information from an operator network, according to various embodiments;
According to various embodiments, the communication processor 440 may register in the operator network 605. As described above, the communication processor 440 may register in the operator network 605 based on at least one of transmission of a registration request message, reception of a registration accept message, and transmission of a registration complete message. In operation 731, the communication processor 440 may receive identification information for at least one application allowed to use the carrier network from the operator network 605 after registering in the operator network 605 (or in the registration process). For example, the electronic device 101 may receive the URSP rule. The traffic descriptor of the URSP rule may include identification information for the application allowed for the carrier network.

According to various embodiments, the communication processor 440 may provide at least one received application identification information to the TelephonyService 621 in operation 732. The TelephonyService 621 may provide the at least one received application identification information to the PermissionAssignmentService 613 in operation 733. The PermissionAssignmentService 613 may store the at least one received application identification information in a list repository 735. For example, the PermissionAssignmentService 613 may store the received at least one application identification information (e.g., package name), as it is, in the list repository 735 or convert the received at least one application identification information and store the converted identification information (e.g., OS-based identification information) in the list repository 735. The format of the application identification information stored in the list repository 735 may be, e.g., the package name and/or OS-based identification information. The list repository 735 according to an embodiment is shown inside the PermissionAssignmentService 613, but this is a schematic diagram showing that the PermissionAssignmentService 613 manages the list repository 735. It will easily be appreciated by one of ordinary skill in the art that the list repository 735 may be included in a memory (e.g., the memory 130 of FIG. 1) or may be a memory (e.g., the memory 130 of FIG. 1).

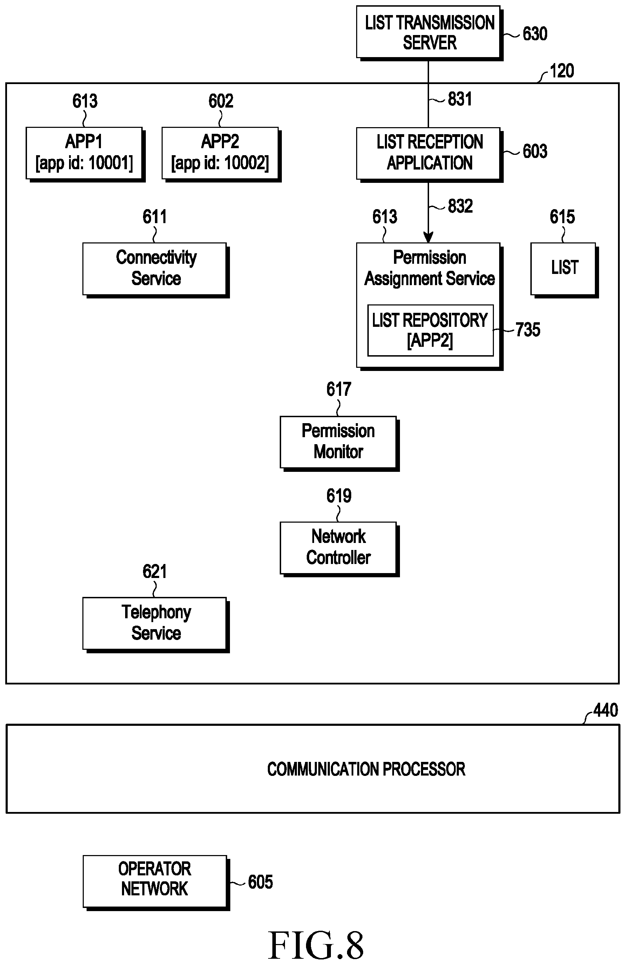

FIG. 8 is a block diagram illustrating an example of an electronic device that receives application identification information from an operator network, according to various embodiments.

According to various embodiments, the list reception application 630 of the processor 120 may receive identification information for at least one application allowed to use the carrier network from the list transmission server 630 in operation 831. For example, the list reception application 630 may receive the identification information for at least one application allowed to use the carrier network from the list transmission server 630 through a Wi-Fi module (not shown). The list reception application 630 may communicate with the list transmission server 630 based on, e.g., IP. The list reception application 630 may send a request for a list of application identification information to, e.g., the list transmission server 630. The list transmission server 630 may transmit the identification information for at least one application allowed to use the carrier network to the list reception application 630 in response to the request. Alternatively, the list transmission server 630 may transmit the application identification information to the list reception application 603 based on a push scheme.

According to various embodiments, the list reception application 603 may transfer the obtained application identification information to the PermissionAssignmentService 613 in operation 832. The PermissionAssignmentService 613 may store the received application identification information in the list repository 735. In another embodiment, the list reception application 603 may communicate with the list transmission server 630 through the communication processor 440. In this case, the communication processor 440 may provide at least one application identifier received from the list transmission server 630 to the list reception application 603 through the TelephonyService 621. The list reception application 603 may transfer the received at least one application identifier to the PermissionAssignmentService 613 through the communication processor 440. The PermissionAssignmentService 613 may store the received application identification information in the list repository 735.

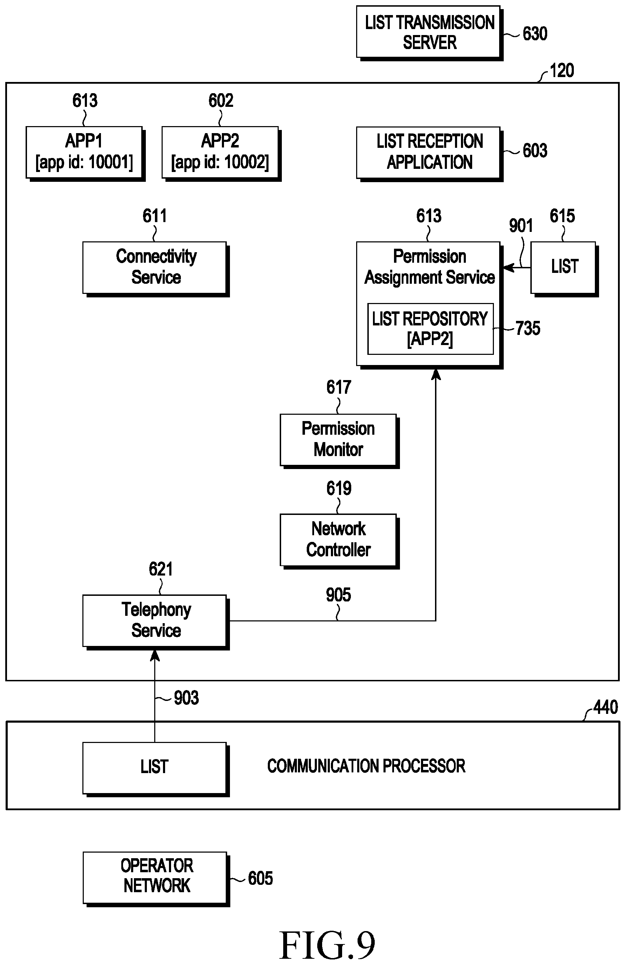

FIG. 9 is a block diagram illustrating an example of an electronic device that obtains previously stored application identification information, according to various embodiments.

According to various embodiments, a previously stored application identification information list 615 may be stored in the memory (e.g., the memory 130 of FIG. 1) and may be read by the processor 120. For example, the PermissionAssignmentService 613 may read the previously stored application identification information list 615 and may store it in the list repository 735 in operation 901.

According to various embodiments, the previously stored application identification information list 623 may be stored in the memory 130 and read by the communication processor 440. For example, the PermissionAssignmentService 613 may read the previously stored application identification information list 623 through, e.g., the TelephonyService 621 in operation 903. The TelephonyService 621 may provide application identification information to the PermissionAssignmentService 613 in operation 903. The PermissionAssignmentService 613 may store the received application identification information in the list repository 735. Although not shown, the PermissionAssignmentService 613 may read the previously stored application identification information list 623 from a SIM (e.g., r-SIM and/or e-SIM) connected with the processor 120 and/or the communication processor 440 and store it in the list repository 735.

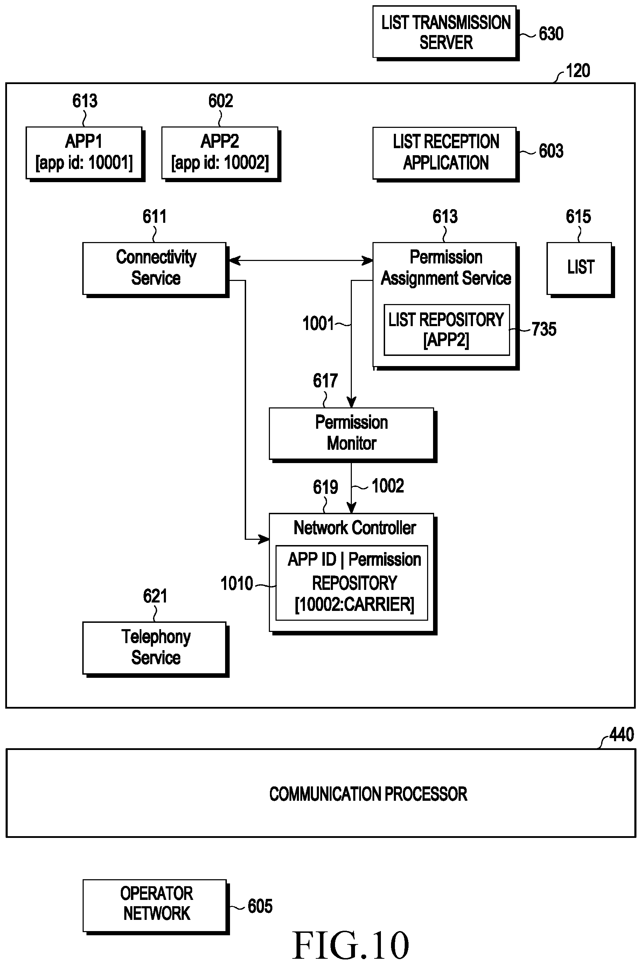

FIG. 10 is a block diagram illustrating an example of an electronic device storing application identification information according to various embodiments.

According to various embodiments, the PermissionAssignmentService 613 may provide the information stored in the list repository 735 to the NetworkController 619 through the PermissionMonitor 617. In one example, in operation 1001, the PermissionAssignmentService 613 may request the PermissionMonitor 617 to update the list of at least one updated application identification information. The PermissionMonitor 617 may provide the requested list of at least one updated application identification information to the NetworkController 619 in operation 1002. The NetworkController 619 may store the received updated at least one application identification information in an application identification information permission association information repository 1010. For example, the repository 1010 may store information (CARRIER) indicating that the carrier network is permitted for the identification information of "10002". The repository 1010 according to an embodiment is shown inside the NetworkController 619, but this is a schematic diagram showing that the NetworkController 619 manages the repository 1010. It will easily be appreciated by one of ordinary skill in the art that the repository 1010 may be included in a memory (e.g., the memory 130 of FIG. 1) or may be a memory (e.g., the memory 130 of FIG. 1).

Meanwhile, the OS-based identification information of "10002" is merely an example and may be replaced with a package name. The NetworkController 619 may match and store the permission for use of the carrier network with the application identification information. Meanwhile, the repository 1010 may store not only information for permission for use of the carrier network but also permission information for use of another network. For example, the PermissionAssignmentService 613 may be configured in the framework layer, and the NetworkController 619 may be configured in the kernel layer, but is not limited to a specific position for configuration. Further, the PermissionAssignmentService 613 and the NetworkController 619 may be implemented as a single one.

According to various embodiments, the electronic device 101 may obtain a plurality of application identification information lists based on a plurality of schemes. For example, by default, the electronic device 101 may read previously stored application identification information. If the electronic device 101 receives the application identification information list through a NAS message or from the list transmission server 630, it may perform an update with received application identification information list. The electronic device 101 may select an application identification information list based on, e.g., priority. The priority is not limited to a specific one.

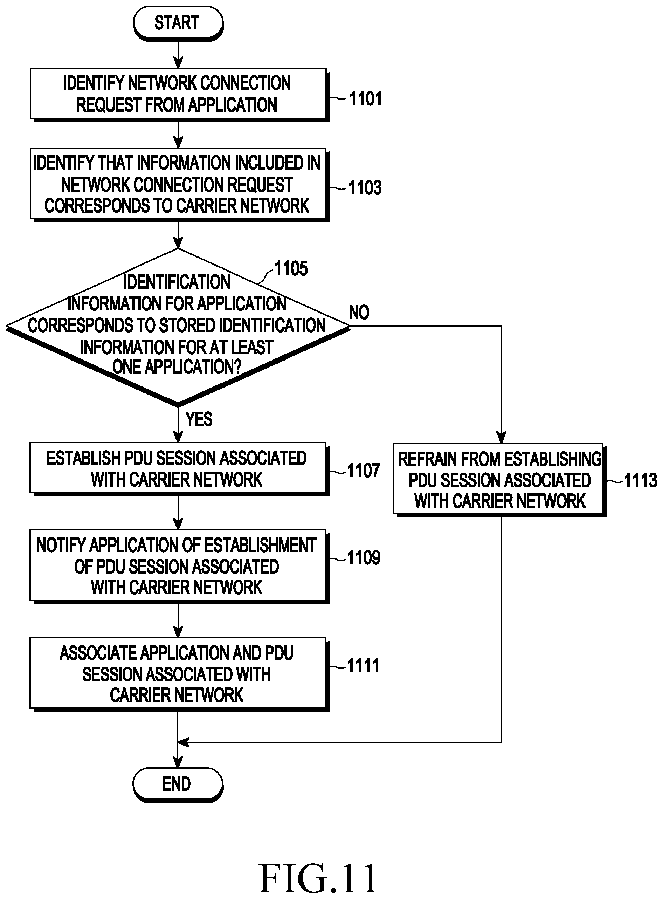

FIG. 11 is a flowchart illustrating an example method of operating an electronic device according to various embodiments.

According to various embodiments, the electronic device 101 (e.g., at least one of the processor 120, the first communication processor 212, the second communication processor 214, or the communication processor 440) may identify a network connection request from an application in operation 1101. In operation 1103, the electronic device 101 may identify that information included in the network connection request (e.g., requestNetwork) corresponds to the carrier network. For example, the electronic device 101 may identify the CarrierNetworkRequestSpecifier (e.g., connection capability or network capability) included in the network connection request. In operation 1105, the electronic device 101 may determine whether identification information for the application requesting network connection corresponds to the stored identification information for at least one application, e.g., the identification information for the application allowed to use the carrier network. The stored identification information for the at least one application may include identification information stored in at least one of the processor 120, the memory 130, and/or the subscriber identification module 196 of the electronic device 101. As described above, the electronic device 101 may previously store the identification information for at least one application allowed to use the carrier network based on at least one scheme. The electronic device 101 may determine whether the identification information for the application requesting use of the carrier network is included in the identification information for at least one application previously stored.

According to various embodiments, if the identification information for the application requesting network connection corresponds to the stored identification information for at least one application (Yes in 1105), the electronic device 101 may establish a PDU session associated with the carrier network in operation 1107. The electronic device 101 may establish a PDU session associated with the carrier network based on at least one piece of information for establishing the carrier network. The electronic device 101 may notify the application of establishment of the PDU session associated with the carrier network in operation 1109. In operation 1111, the electronic device 101 may associate the application and the PDU session associated with the carrier network. For example, the electronic device 101 may transmit a data packet from the application through the PDU session associated with the carrier network and/or may transmit the data packet received through the PDU session to the application. If the identification information for the application requesting network connection does not correspond to the stored identification information for at least one application (No in 1105), the electronic device 101 may refrain from establishing a PDU session associated with the carrier network in operation 1113. Accordingly, it is possible to prevent and/or avoid unnecessary establishment of a PDU session associated with the carrier network by a request of an unauthorized application.

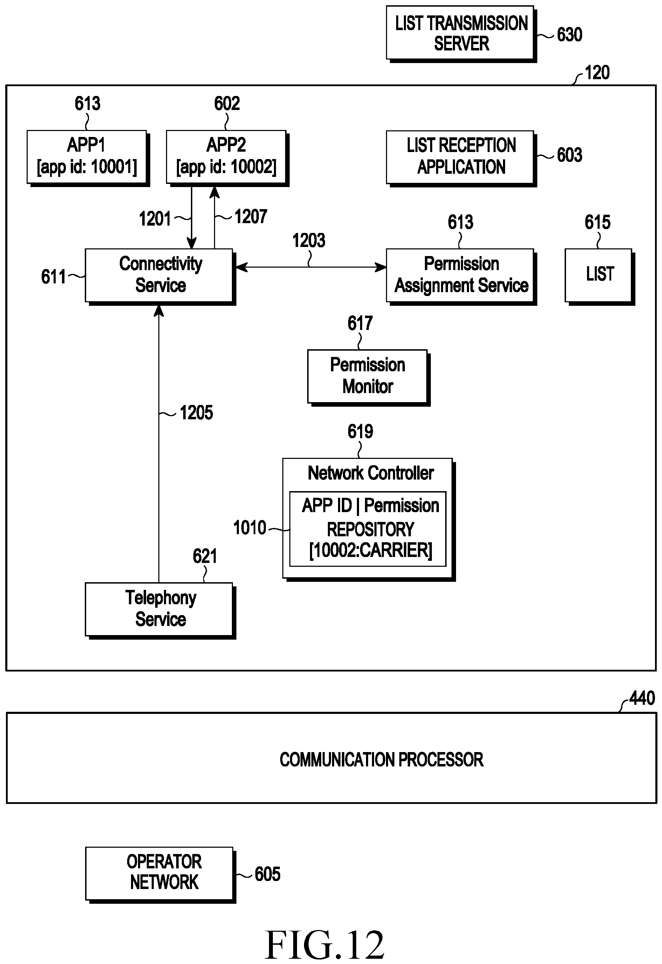

FIG. 12 is a block diagram illustrating an example of an electronic device storing application identification information according to various embodiments.

According to various embodiments, the second application 602 may transmit a network connection request to the Connectivity Service 611 in operation 1201. The network connection request may include information (e.g., CarrierNetworkRequestSpecifier) for identifying the carrier network. The ConnectivityService 611 may request the PermissionAssignmentService 613 to determine whether the second application 602 has authority to use the carrier network based on the identification of information for identifying the carrier network (e.g., CarrierNetworkRequestSpecifier) in operation 1203. The PermissionAssignmentService 613 may refer to the application identification information stored in the list repository 735. The list repository 735 according to an embodiment is shown inside the PermissionAssignmentService 613, but this is a schematic diagram showing that the PermissionAssignmentService 613 manages the list repository 735. It will easily be appreciated by one of ordinary skill in the art that the list repository 735 may be included in a memory (e.g., the memory 130 of FIG. 1) or may be a memory (e.g., the memory 130 of FIG. 1).

For example, it is assumed that the list repository 735 previously stores the identification information for the second application 602 as application identification information for use of the carrier network. Meanwhile, in another embodiment, the ConnectivityService 611 may refer to the list 1010 of the NetworkController 619 to determine whether the second application 602 has authority to use the carrier network.

According to various embodiments, the PermissionAssignmentService 613 may identify that the identification information for the second application 602 for which the determination is requested is stored in the list repository 735. The PermissionAssignmentService 613 may transmit, to the Connectivity Service 611, information indicating that the second application 602 has the authority to use the carrier network. The ConnectivityService 611 may perform a task for PDN connection (e.g., a task for establishing a PDU session) in operation 1205. The ConnectivityService 611 may perform a task for PDN connection (e.g., a task for establishing a PDU session) using, e.g., the TelephonyService 621. The ConnectivityService 611 may notify the second application 602, which made the initial request, of success in PDN connection (e.g., success in establishing a PDU session) in operation 1207.

In another example, an unauthorized application (e.g., the first application 601) may transmit a network connection request to the ConnectivityService 611. The network connection request may include information (e.g., CarrierNetworkRequestSpecifier) for identifying the carrier network. The ConnectivityService 611 may request the PermissionAssignmentService 613 to determine whether the first application 601 has the authority to use the carrier network. The PermissionAssignmentService 613 may refer to the application identification information stored in the list repository 735. For example, it is assumed that identification information for the first application 601 is not stored in the list repository 735. The PermissionAssignmentService 613 may transmit, to the Connectivity Service 611, information indicating that the first application 601 has no authority to use the carrier network. In this case, as the subsequent operations are stopped, it is possible to prevent and/or avoid an unauthorized application (e.g., the first application 601) from accessing the carrier network.

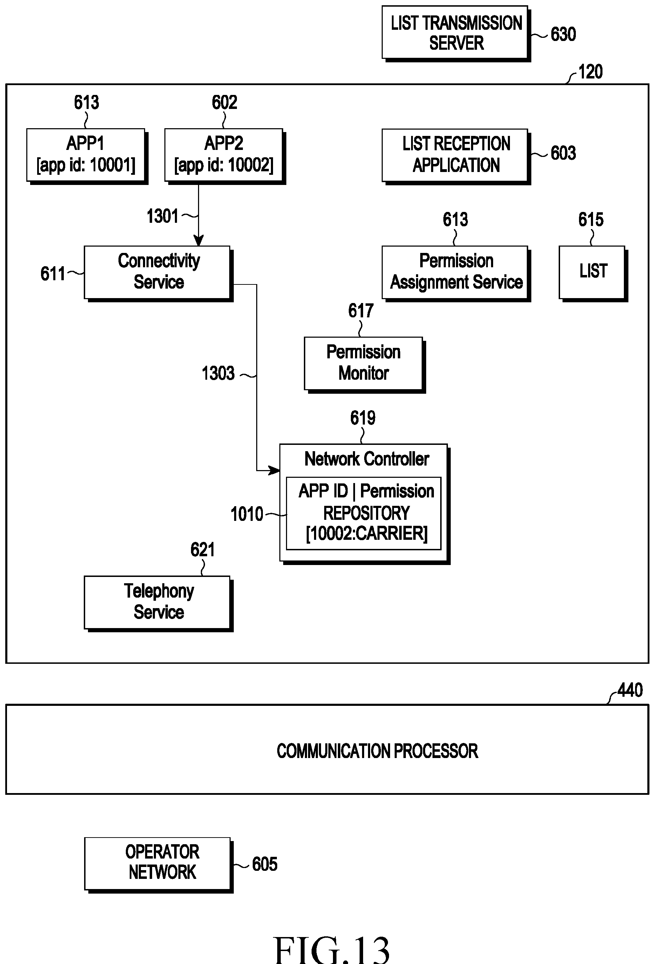

FIG. 13 is a block diagram illustrating an example of an electronic device storing application identification information according to various embodiments.

According to various embodiments, the second application 602 may identify that connection to the PDN corresponding to the carrier network is successful (e.g., establishment of a PDU session succeeds) and may request the ConnectivityService 611 to connect to the carrier network in operation 1301. The Connectivity Service 611 may request the NetworkController 619 to associate the second application 602 and the PDU session corresponding to the carrier network in operation 1303. In various examples, the ConnectivityService 611 may establish a PDU session according to an initial network connection request (e.g., operation 1201 in FIG. 12) from the second application 602 and, even without a further additional request, request the NetworkController 619 to associate the second application 602 and the PDU session corresponding to the carrier network.

According to various embodiments, the NetworkController 619 may determine whether to associates (e.g., forming and connect a socket (or a port)) the second application 602 and the PDU session corresponding to the carrier network based on the reference information stored in the repository 1010. If it is determined based on the reference information that the second application 602 has the authority to use the carrier network, the NetworkController 619 may associate the second application 602 and the PDU session corresponding to the carrier network. For example, the electronic device 101 may bind the socket corresponding to the second application 602 to the PDU session corresponding to the carrier network. Binding may be performed based on, e.g., NetHandle callback, but is not limited thereto.

If it is determined based on the reference information that the application (e.g., the first application 601) has no authority to use the carrier network, the NetworkController 619 may not associate the first application 601 and the PDU corresponding to the carrier network. Meanwhile, in another embodiment, the ConnectivityService 611 may refer to the list repository 735 of the PermissionAssignmentService 613 to determine whether the second application 602 has authority to use the carrier network.

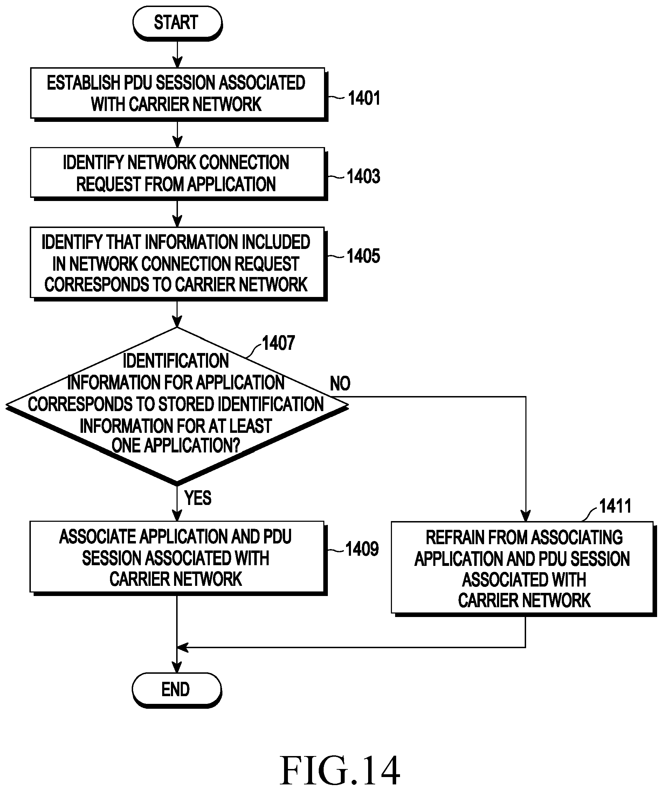

FIG. 14 is a flowchart illustrating an example method of operating an electronic device according to various embodiments.

According to various embodiments, the electronic device 101 (e.g., at least one of the processor 120, the first communication processor 212, the second communication processor 214, or the integrated communication processor 260) may establish a PDU session associated with the carrier network in operation 1401. After the PDU session associated with the carrier network is established, the electronic device 101 may identify a network connection request from the application in operation 1403. For example, the electronic device 101 may establish a PDU session associated with the carrier network based on a network connection request from another application having the authority for the carrier network, and it may then identify the network connection request from the application in operation 1403. Meanwhile, there is no limit to an example of previous establishment of a PDU session associated with the carrier network.

According to various embodiments, the electronic device 101 may identify that the information included in the network connection corresponds to the carrier network in operation 1405. For example, the electronic device 101 may identify the CarrierNetworkRequestSpecifier included in the network connection request. In operation 1407, the electronic device 101 may determine whether identification information for the application corresponds to the stored identification information for at least one application, e.g., the identification information for the application allowed to use the carrier network. If the identification information for the application corresponds to the stored identification information for at least one application (Yes in 1407), the electronic device 101 may associate the application and the PDU session associated with the carrier network in operation 1409. If the identification information for the application does not correspond to the stored identification information for at least one application (No in 1407), the electronic device 101 may refrain from associating the application and the PDU session associated with the carrier network in operation 1411. As described above, even after the electronic device 101 has already been connected with the carrier network, it is possible to prevent and/or avoid unauthorized applications from using the carrier network.

According to various embodiments, the electronic device 101 may associate the second application with the PDU session associated with the carrier network. Thereafter, the electronic device 101 may update the identification information for the application allowed to use the carrier network. In this case, the electronic device 101 may determine whether the second application may still use the carrier network based on the updated application identification information. If it is determined that the second application may still use the carrier network, the electronic device 101 may transmit/receive traffic of the second application through the PDU session associated with the carrier network. The electronic device 101 may maintain the connection between the second application and the PDU session or may perform a reconnection. If it is determined that the second application may not use the carrier network, the electronic device 101 may release the connection and may notify the second application of this.

According to various example embodiments, the electronic device may comprise a memory and at least one processor. The at least one processor may be configured to obtain identification information for at least one application allowed to use a carrier network and store the obtained identification information for the at least one application in the memory, identify a network connection request from a first application executed by the at least one processor, determine whether identification information for the first application corresponds to the stored identification information for the at least one application, based on the identification of the network connection request, establish a protocol data unit (PDU) session associated with the carrier network, based on the identification information for the first application corresponding to the stored identification information for the at least one application, and control the electronic device to transmit/receive data associated with the first application, using the PDU session associated with the carrier network.

According to various example embodiments, the at least one processor may be configured to, as at least part of determining whether the identification information for the first application corresponds to the stored identification information for the at least one application, based on the identification of the network connection request, determine whether the identification information for the first application corresponds to the stored identification information for the at least one application, based on information specifying a network based on the network connection request corresponding to the carrier network.

According to various example embodiments, the network connection request may be based on a format of a requestNetwork, and the information specifying the network may be based on a format of a Network capability or a format of a 3GPP-based connection capability.

According to various example embodiments, the at least one processor may be configured to, as at least part of obtaining the identification information for the at least one application allowed to use the carrier network, receive the identification information for the at least one application from the network, based on registration of the electronic device for the network.

According to various example embodiments, the at least one processor may be configured to, as at least part of receiving the identification information for the at least one application from the network, receive a user equipment route selection policy (URSP) rule from the network. The USRP rule may include a traffic descriptor associated with the identification information for the at least one application and a route selection descriptor associated with the carrier network.

According to various example embodiments, the at least one processor may be configured to, as at least part of obtaining the identification information for the at least one application allowed to use the carrier network, receive the identification information for the at least one application from a list transmission server corresponding to the carrier network.

According to various example embodiments, the at least one processor may be configured to, as at least part of obtaining the identification information for the at least one application allowed to use the carrier network, obtain the identification information for the at least one application stored in at least part of the at least one processor, the memory, or at least one subscriber identification module (SIM) connected to the at least one processor.

According to various example embodiments, the at least one processor may be configured to refrain from establishing the PDU session associated with the carrier network, based on the identification information for the first application not corresponding to the stored identification information for the at least one application.

According to various example embodiments, the at least one processor may be configured to associate the first application with the PDU session associated with the carrier network, based on the identification information for the first application corresponding to the stored identification information for the at least one application.

According to various example embodiments, the at least one processor may be configured to: identify a network connection request from a second application executed by the at least one processor, associate the second application with the PDU session associated with the carrier network, based on identification information for the second application corresponding to the stored identification information for the at least one application, and refrain from associating the second application with the PDU session associated with the carrier network, based on the identification information for the second application not corresponding to the stored identification information for the at least one application.

According to various example embodiments, the at least one processor may be configured to: obtain identification information for at least one other application allowed to use the carrier network and store the obtained identification information for the at least one other application in the memory, control the electronic device to transmit/receive additional data associated with the first application, using the PDU session associated with the carrier network, based on the identification information for the first application corresponding to the stored identification information for the at least one other application, and control the electronic device to refrain from transmitting/receiving the additional data associated with the first application, using the PDU session associated with the carrier network, based on the identification information for the first application not corresponding to the stored identification information for the at least one other application.

According to various example embodiments, a method for operating an electronic device may comprise: obtaining identification information for at least one application allowed to use a carrier network and storing the obtained identification information for the at least one application, identifying a network connection request from a first application executed by the electronic device, determining whether identification information for the first application corresponds to the stored identification information for the at least one application, based on the identification of the network connection request, establishing a protocol data unit (PDU) session associated with the carrier network, based on the identification information for the first application corresponding to the stored identification information for the at least one application, and transmitting/receiving data associated with the first application, using the PDU session associated with the carrier network.

According to various example embodiments, determining whether the identification information for the first application corresponds to the stored identification information for the at least one application, based on the identification of the network connection request may determine whether the identification information for the first application corresponds to the stored identification information for the at least one application, based on information specifying a network based on the network connection request corresponding to the carrier network.

According to various example embodiments, obtaining the identification information for the at least one application allowed to use the carrier network may receive the identification information for the at least one application from the network, based on registration of the electronic device for the network.

According to various example embodiments, receiving the identification information for the at least one application from the network may receive a user equipment route selection policy (URSP) rule from the network. The USRP rule may include a traffic descriptor associated with the identification information for the at least one application and a route selection descriptor associated with the carrier network.

According to various example embodiments, obtaining the identification information for the at least one application allowed to use the carrier network may receive the identification information for the at least one application from a list transmission server corresponding to the carrier network.

According to various example embodiments, obtaining the identification information for the at least one application allowed to use the carrier network may obtain the identification information for the at least one application stored in at least part of the at least one processor, the memory, or at least one SIM connected to the at least one processor.

According to various example embodiments, the method may further comprise: refraining from establishing the PDU session associated with the carrier network, based on the identification information for the first application not corresponding to the stored identification information for the at least one application.

According to various example embodiments, the method may further comprise: associating the first application with the PDU session associated with the carrier network, based on the identification information for the first application corresponding to the stored identification information for the at least one application.

According to various example embodiments, the method may further comprise: identifying a network connection request from a second application executed by the at least one processor, associating the second application with the PDU session associated with the carrier network, based on identification information for the second application corresponding to the stored identification information for the at least one application, and refraining from associating the second application with the PDU session associated with the carrier network, based on the identification information for the second application not corresponding to the stored identification information for the at least one application.

The electronic device according to various embodiments of the disclosure may be one of various types of electronic devices. The electronic devices may include, for example, a portable communication device (e.g., a smart phone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising,
a memory, and
at least one processor configured to:
obtain identification information for at least one application allowed to use a carrier network and store the obtained identification information for the at least one application in the memory,
identify a network connection request from a first application executed by the at least one processor,
determine whether identification information for the first application corresponds to the stored identification information for the at least one application, based on the identification of the network connection request,
establish a protocol data unit (PDU) session associated with the carrier network, based on the identification information for the first application corresponding to the stored identification information for the at least one application, and
control the electronic device to transmit/receive data associated with the first application, using the PDU session associated with the carrier network.

2. The electronic device of claim 1, wherein the at least one processor is configured to, as at least part of determining whether the identification information for the first application corresponds to the stored identification information for the at least one application, based on the identification of the network connection request,
determine whether the identification information for the first application corresponds to the stored identification information for the at least one application, based on information specifying a network based on the network connection request corresponding to the carrier network.

3. The electronic device of claim 2, wherein the network connection request is based on a format of a requestNetwork, and wherein the information specifying the network is based on a format of a Network capability or a format of a connection capability.

4. The electronic device of claim 1, wherein the at least one processor is configured to, as at least part of obtaining the identification information for the at least one application allowed to use the carrier network,
receive the identification information for the at least one application from the network, based on registration of the electronic device for the network.

5. The electronic device of claim 4, wherein the at least one processor is configured to, as at least part of receiving the identification information for the at least one application from the network,
receive a user equipment route selection policy (URSP) rule from the network, and
wherein the USRP rule includes a traffic descriptor associated with the identification information for the at least one application and a route selection descriptor associated with the carrier network.

6. The electronic device of claim 1, wherein the at least one processor is configured to, as at least part of obtaining the identification information for the at least one application allowed to use the carrier network,
receive the identification information for the at least one application from a list transmission server corresponding to the carrier network.

7. The electronic device of claim 1, wherein the at least one processor is configured to, as at least part of obtaining the identification information for the at least one application allowed to use the carrier network,
obtain the identification information for the at least one application stored in at least part of the at least one processor, the memory, or at least one subscriber identification module (SIM) connected to the at least one processor.

8. The electronic device of claim 1, wherein the at least one processor is configured to control the electronic device to refrain from establishing the PDU session associated with the carrier network, based on the identification information for the first application not corresponding to the stored identification information for the at least one application.

9. The electronic device of claim 1, wherein the at least one processor is configured to associate the first application with the PDU session associated with the carrier network, based on the identification information for the first application corresponding to the stored identification information for the at least one application.

10. The electronic device of claim 1, wherein the at least one processor is configured to:
identify a network connection request from a second application executed by the at least one processor,
associate the second application with the PDU session associated with the carrier network, based on identification information for the second application corresponding to the stored identification information for the at least one application, and
refrain from associating the second application with the PDU session associated with the carrier network, based on the identification information for the second application not corresponding to the stored identification information for the at least one application.

11. The electronic device of claim 1, wherein the at least one processor is configured to:
obtain identification information for at least one other application allowed to use the carrier network and store the obtained identification information for the at least one other application in the memory,
control the electronic device to transmit/receive additional data associated with the first application, using the PDU session associated with the carrier network, based on the identification information for the first application corresponding to the stored identification information for the at least one other application, and
control the electronic device to refrain from transmitting/receiving the additional data associated with the first application, using the PDU session associated with the carrier network, based on the identification information for the first application not corresponding to the stored identification information for the at least one other application.

12. A method of operating an electronic device, the method comprising,
obtaining identification information for at least one application allowed to use a carrier network and storing the obtained identification information for the at least one application;
identifying a network connection request from a first application executed by the electronic device;
determining whether identification information for the first application corresponds to the stored identification information for the at least one application, based on the identification of the network connection request;
establishing a protocol data unit (PDU) session associated with the carrier network, based on the identification information for the first application corresponding to the stored identification information for the at least one application, and
transmitting/receiving data associated with the first application, using the PDU session associated with the carrier network.

13. The method of claim 12, wherein determining whether the identification information for the first application corresponds to the stored identification information for the at least one application, based on the identification of the network connection request,
determines whether the identification information for the first application corresponds to the stored identification information for the at least one application, based on information specifying a network based on the network connection request corresponding to the carrier network.

14. The method of claim 12, wherein obtaining the identification information for the at least one application allowed to use the carrier network,
receives the identification information for the at least one application from the network, based on registration of the electronic device for the network.

15. The method of claim 14, wherein receiving the identification information for the at least one application from the network,
receives a user equipment route selection policy (URSP) rule from the network, and
wherein the USRP rule includes a traffic descriptor associated with the identification information for the at least one application and a route selection descriptor associated with the carrier network.
